# FASCICULE DE BREVET EUROPEEN

(11) **EP 2 292 459 B1**
(45) Date de publication et mention de la délivrance du brevet: **06.04.2016**
(21) Numéro de dépôt: 10173875.5
(22) Date de dépôt: 24.08.2010
(51) Int. Cl.: B60L 11/18, F02N 11/00, H02J 7/14, H02J 7/34, B60W 20/00, F02N 11/08, B60K 6/485

(54) **Procédé de charge d'un module auxiliaire de stockage d'énergie**
Ladeverfahren eines Hilfsmoduls zur Energiespeicherung
Method for charging an auxiliary power-storage module

(30) Priorité: 02.09.2009 FR 0955973
(43) Date de publication de la demande: 09.03.2011
(73) Titulaire: VALEO EQUIPEMENTS ELECTRIQUES MOTEUR, 94046 Créteil Cedex (FR)
(72) Inventeur: Rechdan, Raymond, 94440 Villecresnes (FR); Chemin, Michaël, 51700 Festigny (FR)
(74) Mandataire: Tran, Chi-Hai

(56) Documents cités:
- WO-A2-2008/000978
- WO-A2-2009/001001
- FR-A1- 2 912 268
- US-A1- 2004 124 811

## Description

L'invention concerne un procédé de charge d'un module auxiliaire de stockage d'énergie dans un système micro-hybride comportant une machine électrique tournante réversible, notamment un alterno-démarreur,' pouvant être reliée à un moteur thermique d'un véhicule automobile.

L'invention concerne également un système micro-hybride.

On connaît des systèmes micro-hybrides de véhicule comportant un alterno-démarreur et un moyen auxiliaire de stockage d'énergie formé par un super-condensateur.

Ce moyen peut permettre, d'une part, d'alimenter électriquement l'alterno-démarreur pour démarrer le moteur thermique, et d'autre part, d'alimenter électriquement un réseau de bord du véhicule.

L'inconvénient de ce moyen de stockage d'énergie est qu'il s'auto-décharge lorsque le moteur thermique et l'alterno-démarreur sont à l'arrêt.

Des problèmes peuvent alors être rencontrés lors d'une demande de démarrage du moteur thermique, notamment par l'alterno-démarreur.

En outre, des problèmes de fourniture d'une alimentation en courant d'un réseau de bord du véhicule peuvent également être rencontrés.

Ces moyens de stockage doivent donc être chargés électriquement pour être opérationnels.

Le document FR2912268A1 décrit un procédé de charge d'un module auxiliaire de stockage d'énergie dans un système micro-hybride comportant une machine électrique tournante réversible reliée à un moteur thermique d'un véhicule automobile, un module de commande, et une unité principale de stockage d'énergie, la machine électrique et l'unité principale de stockage d'énergie formant deux moyens distincts pour charger le module auxiliaire de stockage d'énergie.

L'invention vise à remédier aux inconvénients précités.

Selon un premier aspect, l'invention concerne un procédé de charge d'un module auxiliaire de stockage d'énergie défini par les caractéristiques de la revendication 1.

Grâce à l'invention, il est possible de charger électriquement le module de stockage d'énergie de manière à assurer sa disponibilité, notamment dans le cas d'une demande de redémarrage du moteur thermique, et pour alimenter électriquement un réseau de bord du véhicule.

Selon un mode de réalisation de l'invention, l'étape de commander le module de commande afin de charger électriquement le module auxiliaire de stockage d'énergie peut être réalisée à l'aide, d'abord, de l'unité principale de stockage d'énergie, puis, de la machine électrique tournante réversible.

En variante, l'étape de commander le module de commande afin de charger électriquement le module auxiliaire de stockage d'énergie peut être réalisée à l'aide, d'abord, de la machine électrique tournante réversible, puis, de l'unité principale de stockage d'énergie.

Selon un autre mode de réalisation de l'invention, l'étape de commander le module de commande afin de charger électriquement le module auxiliaire de stockage d'énergie peut être réalisée à l'aide, dans la seconde sous-étape, à la fois de l'unité principale de stockage d'énergie et de la machine électrique tournante réversible, en même temps.

Cela permet avantageusement de charger plus rapidement le module auxiliaire de stockage d'énergie et donc de le rendre disponible plus vite dans le système micro-hybride.

De préférence, la première sous-étape de commander le module de commande afin de charger électriquement le module auxiliaire de stockage d'énergie peut être réalisée jusqu'à ce que l'état de charge du module auxiliaire de stockage d'énergie soit égal à une deuxième valeur de seuil d'état de charge prédéterminée.

Cette deuxième valeur de seuil d'état de charge prédéterminée peut correspondre à une valeur de tension aux bornes du module auxiliaire de stockage d'énergie.

Par exemple, cette deuxième valeur de seuil prédéterminée peut être comprise entre environ 12,5Volt (V) et environ 15Volt (V).

La deuxième valeur de seuil prédéterminée d'état de charge peut dépendre de la longueur de câbles électriques reliant le module auxiliaire de stockage d'énergie, d'une part, à la machine électrique tournante réversible, notamment via un convertisseur alternatif-continu, et d'autre part, à l'unité principale de stockage d'énergie, notamment via un convertisseur continu-continu.

L'étape de commander le module de commande afin de charger électriquement le module auxiliaire de stockage d'énergie est réalisée lorsque le moteur thermique est tournant.

Le cas échéant, le moteur thermique peut être démarré grâce à un dispositif de démarrage auxiliaire du système micro-hybride.

Selon un mode de réalisation de l'invention, l'unité principale de stockage d'énergie peut charger électriquement le module auxiliaire de stockage d'énergie via un convertisseur continu-continu du système micro-hybride.

Selon un autre mode de réalisation de l'invention, la machine électrique tournante réversible peut charger électriquement le module auxiliaire de stockage d'énergie via un convertisseur alternatif-continu du système micro-hybride.

Pour cela, un rotor de machine électrique tournante réversible peut être alimenté électriquement ayant une tension relativement faible délivrée par le module auxiliaire de stockage d'énergie. Cette alimentation est réalisée en continu au moins pendant une période prédéterminée. On utilise alors un champ magnétique rémanent présent dans le rotor de la machine électrique tournante réversible, champ magnétique qui peut avantageusement être augmenté grâce à des aimants permanents. Ainsi il est possible de récupérer un courant généré au stator et des tensions non nulles aux bornes d'un stator de la machine électrique tournante réversible sans avoir appliqué un courant d'excitation initial à cette machine. Le faible courant généré au stator alimente non seulement le module auxiliaire de stockage d'énergie, mais aussi un enroulement d'excitation du rotor, puisque celui-ci est directement alimenté par la tension délivrée par ce module auxiliaire de stockage d'énergie. On observe alors un effet cumulatif, dit de rétroaction à coefficient positif. En effet, la tension aux bornes du module auxiliaire de stockage d'énergie augmente, et le courant d'excitation augmente aussi, ce qui à pour effet une augmentation corrélative des tensions générées par le stator de la machine, ce qui a à son tour pour effet d'augmenter le courant d'excitation de l'enroulement de rotor et ainsi de suite.

Selon un autre aspect, l'invention concerne un système micro-hybride pour véhicule automobile défini par les caractéristiques de la revendication 7.

De préférence, le système micro-hybride peut comporter un dispositif de démarrage auxiliaire apte à démarrer le moteur thermique, ce dispositif pouvant notamment être relié à l'unité principale de stockage d'énergie.

Selon encore un autre aspect, l'invention concerne un véhicule automobile comportant un système micro-hybride tel que décrit ci-dessus.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un système micro-hybride selon l'invention, et
- la figure 2 correspond à un schéma-blocs illustrant différentes étapes de fonctionnement du système de la figure 1.

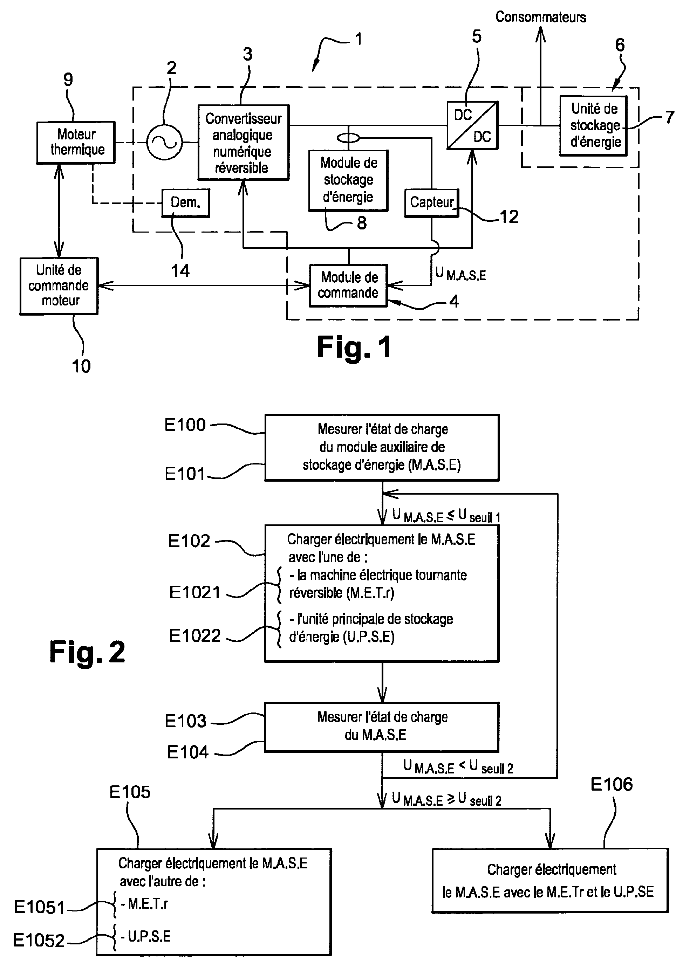

On a représenté sur la figure 1 un système micro-hybride 1 comportant une machine électrique tournante réversible polyphasée 2, un convertisseur de puissance réversible de type alternatif-continu 3, un convertisseur de puissance réversible de type continu-continu 5, un module auxiliaire de stockage d'énergie 8, un module de commande 4, et un réseau de distribution électrique 6.

La machine électrique tournante réversible polyphasée 2 est formée, dans l'exemple considéré, par un alterno-démarreur de véhicule automobile.

L'alterno-démarreur 2 est capable, outre d'être entraîné en rotation par un moteur thermique 9 pour produire de l'énergie électrique (mode alternateur), de transmettre un couple à ce moteur thermique 9 pour un démarrage (mode démarreur).

L'alterno-démarreur 2, les convertisseurs 3 et 5, et le réseau de distribution électrique 6 sont reliés en série.

Le réseau de distribution électrique comporte une unité de stockage d'énergie 7.

L'unité de stockage d'énergie 7 peut comprendre une batterie d'alimentation classique, par exemple de type batterie au plomb. Cette batterie 8 permet, outre d'alimenter l'alterno-démarreur durant une phase de démarrage (mode moteur), de fournir de l'énergie électrique à des consommateurs électriques du véhicule, par exemple des projecteurs, un autoradio, un dispositif de climatisation, des essuie-glaces.

Le convertisseur continu-continu 5 est connecté en série entre le convertisseur alternatif-continu 3 et la batterie 7.

Le module auxiliaire de stockage d'énergie 8 est connecté en parallèle entre les convertisseurs 3 et 5.

Le module auxiliaire de stockage d'énergie 8 peut avantageusement comporter une pluralité de cellules capacitives de manière à former un super-condensateur.

Dans l'exemple décrit, l'alterno-démarreur 2 peut être utilisé dans une architecture de type à freinage récupératif, afin de transformer une partie de l'énergie mécanique issue d'un freinage en énergie électrique, grâce notamment au super-condensateur 8.

Le convertisseur 5 permet de délivrer, outre une tension normale issue de l'alterno-démarreur 2 fonctionnant en mode générateur, une tension élevée, par exemple une tension dite "flottante", au réseau de distribution électrique 6.

Cette tension élevée peut être issue directement de l'alterno-démarreur 2 fonctionnant en mode de récupération d'énergie lors d'un freinage, ou du super-condensateur 8.

Le convertisseur 3 autorise des transferts bidirectionnels d'énergie électrique entre l'alterno-démarreur 2 et la batterie 8, ces transferts étant notamment commandés par le module de commande 4 connecté au convertisseur 3.

Le module de commande 4 du système micro-hybride 1 peut être construit autour d'un microprocesseur associé à un moyen de contrôle et de commande.

Le module de commande 4 est relié à une unité de commande moteur 10 apte à gérer le moteur thermique 9.

L'unité de commande moteur 10 est apte à recevoir des informations représentatives d'un état du moteur 9, notamment via des moyens de mesures disposés notamment sur ledit moteur 9.

Ces informations correspondent à des paramètres tels que le régime du moteur 9, les températures ambiante et moteur, et les actions du conducteur du véhicule.

En fonction notamment de ces paramètres, l'unité de commande moteur 10 envoie des ordres au module de commande 4.

Par exemple, cet ordre peut correspondre à une demande de démarrage du moteur thermique 9.

Ainsi, le module de commande 4 peut commander des ordres d'activation des convertisseurs 3 et 5.

Ces ordres d'activation correspondent respectivement, pour le convertisseur 3, à un état de fourniture du courant délivré par l'alterno-démarreur 1 au super-condensateur 8, et pour le convertisseur 5, à un état de fourniture du courant délivré par la batterie 7 au super-condensateur 8.

Dans l'exemple décrit, les ordres d'activation permettent de charger le super-condensateur 8 pour le rendre opérationnel.

L'ordre d'activation intervient lorsqu'apparaît notamment une phase de démarrage du moteur thermique, et lorsque le super-condensateur 8 n'est pas suffisamment chargé électriquement pour assurer le démarrage du moteur thermique 9.

Dans ce cas, le moteur thermique 9 est démarré grâce à un dispositif de démarrage auxiliaire 14 du système micro-hybride 1.

Ce dispositif de démarrage auxiliaire 14, notamment un démarreur classique, est relié au moteur thermique 9 ainsi qu'à la batterie 7 (non représenté).

Ainsi, dans l'exemple décrit, les étapes du procédé de charge du super-condensateur 8 qui vont maintenant être décrites, en référence à la figure 2, sont réalisées alors que le moteur thermique 9 est tournant.

Dans l'exemple décrit, lorsque qu'une demande de démarrage du moteur thermique 9 intervient, le module de commande 4 contrôle un état de charge du super-condensateur 8 à une étape E100.

Ce module 4 obtient à cette étape E100 par exemple la tension aux bornes du super-condensateur 8 appelée U_{M.A.S.E}.

La tension U_{M.A.S.E} provient d'un capteur 12 relié au module 4.

Le capteur 12 est de préférence disposé à proximité du super-condensateur 8.

La tension U_{M.A.S.E} est ensuite transmise au module 4 à qui va la charger et la mémoriser dans une mémoire par exemple de type RAM ou EEPROM (respectivement "random access memory" et "electrically erasable programmable read only memory" en anglais).

Cette mémoire est de préférence implantée dans ce module 4.

Le module 4 compare, à une étape E101, la tension U_{M.A.S.E} à une première tension de seuil prédéterminée Uₛₑᵤᵢₗ₁.

Cette tension Uₛₑᵤᵢₗ₁ peut par exemple être comprise dans l'intervalle de valeur [8V; 12V].

Si la tension U_{M.A.S.E} est supérieure ou égale à la tension Uₛₑᵤᵢₗ₁, alors le module de commande 4 commande, à une étape E102, de charger électriquement le super-condensateur 8 avec l'un de l'alterno-démarreur 2 à une sous-étape E1021, ou de la batterie 7, à une sous-étape E1022.

Par exemple, le module de commande 4 peut avantageusement commander l'activation du convertisseur continu-continu 5 pour commencer la charge électrique du super-condensateur 8 avec la batterie 7.

Le module de commande 4 contrôle à nouveau, à une étape E103, l'état de charge du super-condensateur 8 en obtenant la tension U_{M.A.S.E}, transmise puis chargée et mémorisée dans le module 4.

Le module 4 compare, à une étape E104, la tension U_{M.A.S.E} à une deuxième tension de seuil prédéterminée Uₛₑᵤᵢₗ₂.

Cette tension Uₛₑᵤᵢₗ₂ peut par exemple être comprise dans l'intervalle de valeur [12,5V; 15V].

Si la tension U_{M.A.S.E} est inférieure ou égale à la tension Uₛₑᵤᵢₗ₂, alors le module de commande 4 commande, à une étape E105, de charger électriquement le super-condensateur 8 avec l'autre de l'alterno-démarreur 2 à une sous-étape E1051, ou de la batterie 7, à une sous-étape E1052.

Par exemple, le module de commande 4 peut avantageusement commander la désactivation du convertisseur continu-continu 5 et commander l'activation du convertisseur alternatif-continu 3 pour continuer la charge électrique du super-condensateur 8 avec l'alterno-démarreur 2 de l'étape E102.

En variante de l'étape E105, si la tension U_{M.A.S.E} est supérieure ou égale à la tension Uₛₑᵤᵢₗ₂, alors le module de commande 4 commande, à une étape E106, de charger électriquement le super-condensateur 8 avec l'alterno-démarreur 2 et avec la batterie 7.

Par exemple, le module de commande 4 peut avantageusement garder le convertisseur continu-continu 5 activé et commander l'activation du convertisseur alternatif-continu 3 pour continuer la charge électrique du super-condensateur 8 avec l'alterno-démarreur 2 et la batterie 7.

Ainsi, il est possible de rendre opérationnel le super-condensateur 8 de manière à assurer sa disponibilité, notamment dans le cas d'une demande de redémarrage du moteur thermique 9, et pour alimenter électriquement le réseau de distribution 6.

Si le calcul de comparaison résulte en une tension U_{M.A.S.E} inférieure à la tension Uₛₑᵤᵢₗ₂, alors le module de commande 4 continue la charge du super-condensateur 8 avec l'un ou l'autre de l'alternateur 2 et de la batterie 7.

Le système micro-hybride 1 de la figure 1 et son fonctionnement qui vient d'être décrit est applicable à un système micro-hybride ne permettant pas un fonctionnement en freinage récupératif.

Dans un autre mode de réalisation de l'invention non représenté, le système micro-hybride peut comporter, à la différence du système micro-hybride décrit à la figure 1, un ensemble comprenant un convertisseur continu-continu réversible et un super-condensateur montés en série, cet ensemble étant connecté en parallèle entre le convertisseur alternatif-continu et la batterie.

## Revendications

1. Procédé de charge d'un module auxiliaire de stockage d'énergie (8) dans un système micro-hybride (1) comportant une machine électrique tournante réversible (2) reliée à un moteur thermique (9) d'un véhicule automobile, un module de commande (4), et une unité principale de stockage d'énergie (7), la machine électrique et l'unité principale de stockage d'énergie formant deux moyens distincts pour charger le module auxiliaire de stockage d'énergie, le procédé étant **caractérisé en ce que** ladite charge est réalisée lorsque le moteur thermique (9) est tournant, et **en ce qu'**il comporte les étapes suivantes:
- mesurer un état de charge du module auxiliaire de stockage d'énergie,
- lorsque l'état de charge du module auxiliaire de stockage d'énergie est inférieur à une première valeur de seuil prédéterminée d'état de charge (Uₛₑᵤᵢₗ₁), commander le module de commande afin de charger électriquement le module auxiliaire de stockage d'énergie à l'aide:
i. dans une première sous-étape, d'un premier moyen de charge, puis,
ii. dans une seconde sous-étape, soit du second moyen de charge, soit des deux moyens de charge.

2. Procédé selon la revendication précédente, **caractérisé par le fait que** la première sous-étape de commander le module de commande (4) afin de charger électriquement le module auxiliaire de stockage d'énergie (8) est réalisée jusqu'à ce que l'état de charge du module auxiliaire de stockage d'énergie soit égal à une deuxième valeur de seuil prédéterminée d'état de charge (Uₛₑᵤᵢₗ₂).

3. Procédé selon la revendication précédente, **caractérisé par le fait que** la deuxième valeur de seuil prédéterminée d'état de charge (Uₛₑᵤᵢₗ₂) correspond à une valeur de tension aux bornes du module auxiliaire de stockage d'énergie (8).

4. Procédé selon la revendication précédente, **caractérisé par le fait que** le moteur thermique (9) est démarré grâce à un dispositif de démarrage auxiliaire (14) du système micro-hybride (1).

5. Procédé selon l'une quelconque des revendications précédentes, **caractérisé par le fait que** l'unité principale de stockage d'énergie (7) charge électriquement le module auxiliaire de stockage d'énergie (8) via un convertisseur continu-continu (3) du système micro-hybride (1).

6. Procédé selon l'une quelconque des revendications précédentes, **caractérisé par le fait que** la machine électrique tournante réversible (2) charge électriquement le module auxiliaire de stockage d'énergie (8) via un convertisseur alternatif-continu (5) du système micro-hybride (1).

7. Système micro-hybride (1) mettant en oeuvre le procédé selon l'une quelconque des revendications précédentes et comportant une machine électrique tournante réversible reliée à un moteur thermique, un module de commande (4), une unité principale de stockage d'énergie (7), et un module auxiliaire de stockage d'énergie (8), la machine électrique et l'unité principale de stockage d'énergie formant deux moyens distincts pour charger le module auxiliaire de stockage d'énergie, **caractérisé en ce que** le module de commande (4) est commandé afin de charger électriquement le module auxiliaire de stockage d'énergie (8) lorsque le moteur thermique (9) est tournant et comprend :
- des moyens pour mesurer un état de charge du module auxiliaire de stockage d'énergie,
- des moyens pour commander, lorsque l'état de charge du module auxiliaire de stockage d'énergie est inférieur à une première valeur de seuil prédéterminée d'état de charge (Uₛₑᵤᵢₗ₁), de manière à charger électriquement le module auxiliaire de stockage d'énergie:
i. dans une première sous-étape, à l'aide d'un premier moyen de charge, puis,
ii. dans une seconde sous-étape, à l'aide soit du second moyen de charge, soit des deux moyens de charge.

8. Véhicule automobile comportant un système micro-hybride (1) selon la revendication précédente.

## Patentansprüche

1. Ladeverfahren eines Hilfsmoduls (8) zur Energiespeicherung in ein Mikro-Hybridsystem (1), umfassend eine reversible elektrische Drehmaschine (2), die mit einem Verbrennungsmotor (9) eines Kraftfahrzeugs verbunden ist, ein Steuermodul (4) und eine Hauptenergiespeichereinheit (7), wobei die elektrische Maschine und die Hauptenergiespeichereinheit zwei getrennte Mittel bilden, um das Hilfsenergiespeichermodul zu laden, wobei das Verfahren **dadurch gekennzeichnet ist, dass** das Laden erfolgt, wenn sich der Verbrennungsmotor (9) dreht, und dass es die folgenden Schritte umfasst:
- Messen eines Ladezustands des Hilfsenergiespeichermoduls,
- wenn der Ladezustand des Hilfsenergiespeichermoduls niedriger als ein erster vorbestimmter Schwellenwert eines Ladezustands (U_{Schwelle1}) ist, Steuern des Steuermoduls derart, dass das Hilfsenergiespeichermodul elektrisch geladen wird, mit Hilfe:
i. eines ersten Lademittels in einem ersten Unterschritt, dann
ii. entweder des zweiten Lademittels oder der beiden Lademittel in einem zweiten Unterschritt.

2. Verfahren nach dem vorhergehenden Anspruch, **dadurch gekennzeichnet, dass** der erste Unterschritt des Steuerns des Steuermoduls (4) derart, dass das Hilfsenergiespeichermodul (8) elektrisch geladen wird, erfolgt, bis der Ladezustand des Hilfsenergiespeichermoduls gleich einem zweiten vorbestimmten Schwellenwert eines Ladezustands (U_{Schwelle2}) ist.

3. Verfahren nach dem vorhergehenden Anspruch, **dadurch gekennzeichnet, dass** der zweite vorbestimmte Schwellenwert eines Ladezustands (U_{Schwelle2}) einem Spannungswert an den Klemmen des Hilfsenergiespeichermoduls (8) entspricht.

4. Verfahren nach dem vorhergehenden Anspruch, **dadurch gekennzeichnet, dass** der Verbrennungsmotor (9) dank einer Hilfsstartvorrichtung (14) des Mikro-Hybridsystems (1) gestartet wird.

5. Verfahren nach einem der vorhergehenden Ansprüche, **dadurch gekennzeichnet, dass** die Hauptenergiespeichereinheit (7) das Hilfsenergiespeichermodul (8) über einen DC/DC-Wandler (3) des Mikro-Hybridsystems (1) elektrisch lädt.

6. Verfahren nach einem der vorhergehenden Ansprüche, **dadurch gekennzeichnet, dass** die reversible elektrische Drehmaschine (2) das Hilfsenergiespeichermodul (8) über einen DC/AC-Wandler (5) des Mikro-Hybridsystems (1) elektrisch lädt.

7. Mikro-Hybridsystem (1), das das Verfahren nach einem der vorhergehenden Ansprüche einsetzt, und eine reversible elektrische Drehmaschine, die mit einem Verbrennungsmotor verbunden ist, ein Steuermodul (4), eine Hauptenergiespeichereinheit (7) und ein Hilfsenergiespeichermodul (8) umfasst, wobei die elektrische Maschine und die Hauptenergiespeichereinheit zwei getrennte Mittel bilden, um das Hilfsenergiespeichermodul zu laden, **dadurch gekennzeichnet, dass** das Steuermodul (4) derart gesteuert wird, dass es das Hilfsenergiespeichermodul (8) elektrisch lädt, wenn der Verbrennungsmotor (9) drehend ist und umfasst:
- Mittel zum Messen eines Ladezustands des Hilfsenergiespeichermoduls,
- wenn der Ladezustand des Hilfsenergiespeichermoduls niedriger als ein erster vorbestimmter Schwellenwert eines Ladezustands (U_{Schwelle1}) ist, Mittel zum Steuern derart, dass das Hilfsenergiespeichermodul elektrisch geladen wird:
i. mit Hilfe eines ersten Lademittels in einem ersten Unterschritt, dann
ii. mit Hilfe entweder des zweiten Lademittels oder der beiden Lademittel in einem zweiten Unterschritt.

8. Kraftfahrzeug, umfassend ein Mikro-Hybridsystem (1) nach dem vorhergehenden Anspruch.

## Claims

1. Method for charging an auxiliary energy storage module (8) in a micro-hybrid system (1) comprising a reversible rotating electrical machine (2) linked to a heat engine (9) of a motor vehicle, a control module (4), and a main energy storage unit (7), the electrical machine and the main energy storage unit forming two distinct means for charging the auxiliary energy storage module, the method being **characterized in that** said charging is done when the heat engine (9) is running, and **in that** it comprises the following steps:
- measuring a state of charge of the auxiliary energy storage module,
- when the state of charge of the auxiliary energy storage module is below a first predetermined state-of-charge threshold value (Uₜₕᵣₑₛₕ₁), controlling the control module in order to electrically charge the auxiliary energy storage module using:
i. in a first substep, a first charging means, then,
ii. in a second substep, either the second charging means or both charging means.

2. Method according to the preceding claim, **characterized in that** the first substep of controlling the control module (4) in order to electrically charge the auxiliary energy storage module (8) is performed until the state of charge of the auxiliary energy storage module is equal to a second predetermined state-of-charge threshold value (Uₜₕᵣₑₛₕ₂).

3. Method according to the preceding claim, **characterized in that** the second predetermined state-of-charge threshold value (Uₜₕᵣₑₛₕ₂) corresponds to a voltage value at the terminals of the auxiliary energy storage module (8).

4. Method according to the preceding claim, **characterized in that** the heat engine (9) is started up using an auxiliary starter device (14) of the micro-hybrid system (1).

5. Method according to any one of the preceding claims, **characterized in that** the main energy storage unit (7) electrically charges the auxiliary energy storage module (8) via a DC-DC converter (3) of the micro-hybrid system (1).

6. Method according to any one of the preceding claims, **characterized in that** the reversible rotating electrical machine (2) electrically charges the auxiliary energy storage module (8) via an AC-DC converter (5) of the micro-hybrid system (1).

7. Micro-hybrid system (1) implementing the method according to any one of the preceding claims and comprising a reversible rotating electrical machine linked to a heat engine, a control module (4), a main energy storage unit (7), and an auxiliary energy storage module (8), the electrical machine and the main energy storage unit forming two distinct means for charging the auxiliary energy storage module, **characterized in that** the control module (4) is controlled in order to electrically charge the auxiliary energy storage module (8) when the heat engine (9) is running and comprises:
- means for measuring a state of charge of the auxiliary energy storage module,
- means for controlling, when the state of charge of the auxiliary energy storage module is below a first predetermined state-of-charge threshold value (Uₜₕᵣₑₛₕ₁), so as to electrically charge the auxiliary energy storage module:
i. in a first substep, using a first charging means, then,
ii. in a second substep, using either the second charging means or both charging means.

8. Motor vehicle comprising a micro-hybrid system (1) according to the preceding claim.
